# EUROPÄISCHE PATENTSCHRIFT

(11) **EP 4 417 748 B1**
(45) Veröffentlichungstag und Bekanntmachung des Hinweises auf die Patenterteilung: **04.11.2026**
(21) Anmeldenummer: 24151075.9
(22) Anmeldetag: 10.01.2024
(51) Int. Cl.: D06F 39/02, D06F 39/08, B01F 25/314, B01F 25/431, B01F 25/433, B01F 25/51, B01F 27/50, D06F 33/37

(54) **MISCHVORRICHTUNG ZUM DURCHMISCHEN EINES ZUSATZSTOFFES MIT EINER FLÜSSIGKEIT IN EINER WASCHMASCHINE, WASCHMASCHINE UND VERFAHREN**
MIXING DEVICE FOR MIXING AN ADDITIVE WITH A LIQUID IN A WASHING MACHINE, WASHING MACHINE AND METHOD
DISPOSITIF DE MÉLANGE POUR MÉLANGER UN ADDITIF AVEC UN LIQUIDE DANS UNE MACHINE À LAVER, MACHINE À LAVER ET PROCÉDÉ

(30) Priorität: 16.02.2023 DE 102023201351
(43) Veröffentlichungstag der Anmeldung: 21.08.2024
(73) Patentinhaber: Henkel AG & Co. KGaA, 40589 Düsseldorf (DE)
(72) Erfinder: Di Maggio, Antonio, 74193 Schwaigern (DE); Schaumann, Uwe, 75038 Oberderdingen (DE); Kessler, Arnd, 40789 Monheim/Rhein (DE); Hardacker, Ingo, 46499 Hamminkeln (DE)

(56) Entgegenhaltungen:
- GB-A- 2 314 091
- JP-A- H0 768 082
- KR-A- 20100 082 481
- US-A1- 2015 238 066

## Beschreibung

### Anwendungsgebiet und Stand der Technik

Die Erfindung bezieht sich auf eine Mischvorrichtung zum Durchmischen eines Zusatzstoffes mit einer Flüssigkeit in einer Waschmaschine und auf eine Waschmaschine mit solch einer Mischvorrichtung. Die Erfindung bezieht sich weiter auf ein Verfahren zum Durchmischen eines Zusatzstoffes mit einer Flüssigkeit mit solch einer Mischvorrichtung oder mit solch einer Waschmaschine.

Aus der DE 10 2016 106 777 A1 ist ein Waschautomat mit einem Laugenbehälter zu Aufnahme von Wäsche bekannt, wobei der Waschautomat einen Aufnahmeabschnitt zum Aufnehmen von einer Mehrzahl von Zusatzstoffen und eine Dosiereinrichtung zum Dosieren zumindest eines Zusatzstoffs aus dem Aufnahmeabschnitt in den Laugenbehälter. Der Waschautomat weist weiter eine Mischkammer zum Mischen von Zusatzstoffen auf, wobei die Mischkammer fluidisch mit dem Aufnahmeabschnitt und dem Laugenbehälter verbunden ist.

Die EP 3 572 575 B1 offenbart eine Waschmaschine mit einer Waschmittelzuführeinheit, die einen Waschmittelspender zur Aufnahme von Waschmittel und einen Waschmittelmischbehälter aufweist, der konfiguriert ist, um einen Teil des Waschmittels mit Waschwasser zu mischen. Die Waschmaschine ist so konfiguriert, dass mit Waschmittel gemischtes Wasser, das im Waschmittelmischbehälter gemischt wurde, durch einen Mischwasserschlauch über einen Waschmittelbehälter in einen Waschbehälter der Waschmaschine abgeleitet wird.

Die JP H07 68082 A offenbart eine Waschmitteldosiervorrichtung, die an der Waschmaschine befestigt wird, um das Waschmittel automatisch in den Wassertank zu geben.

In der GB 2 314 091 A ist eine Vorrichtung zur automatischen Abgabe von Waschmittel offenbart. Die Vorrichtung umfasst einen ersten Vorratsbehälter zur Aufnahme von Waschmittel und einen zweiten Vorratsbehälter zur Aufnahme einer Lösung. Dosiermittel bewirken, dass gesteuerte, vorbestimmte Dosen des Waschmittels automatisch den ersten Vorratsbehälter verlassen und in den zweiten Vorratsbehälter gelangen, wodurch kontinuierlich eine Lösung in einer gleichbleibenden und vorbestimmten Stärke hergestellt wird. Eine Förderpumpe pumpt die Lösung zu mindestens einer Waschmaschine.

Die KR 2010 0082481 A zeigt eine Waschvorrichtung, umfassend eine Wanne, in die Waschpulver und Waschwasser eingefüllt und gemischt oder gelagert werden, eine Trommel, die drehbar in der Wanne ausgebildet ist, und eine Waschwasserzirkulationseinheit, die das Waschpulver und das Waschwasser unter dem unteren Wasserniveau des Waschwassers zirkulieren lässt, um das Waschpulver aufzulösen. Die Waschwasserzirkulationseinheit umfasst ein Einlassrohr, das mit der Bodenfläche der Wanne verbunden ist, eine Zirkulationspumpe und eine erste Auslassleitung, die das ausgelassene Waschwasser unter das untere Wasserniveau der Wanne leitet.

Die US 2015/238066 A1 offenbart eine Reinigungsmittelauslösevorrichtung, umfassend einen Hauptkanal mit einem ersten Anschluss und einem zweiten Anschluss, wobei der erste Anschluss einen Einlass für ein Fluid aufweist und der zweite Anschluss einen Auslass umfasst, der mit einem Wassereinlass einer Waschtrommel verbunden sein kann. Die Reinigungsmittelauslösevorrichtung weist weiter eine Mehrzahl von Ventilen, einen Flüssigkeitssammelraum und eine Venturi-Unterdruckerzeugungseinrichtung, wobei ein Auslass des Flüssigkeitssammelraums durch einen Rückflusskanal mit einer Unterdrucköffnung der Venturi-Unterdruckerzeugungseinrichtung verbunden ist, und wobei ein Auslass der Venturi-Unterdruckerzeugungseinrichtung mit einem Einlass des Hauptkanals verbunden ist, und wobei ein Einlass der Venturi-Unterdruckerzeugungseinrichtung mit einer Wasserquelle verbunden ist.

### Aufgabe und Lösung

Der Erfindung liegt die Aufgabe zugrunde, eine Mischvorrichtung, eine damit ausgerüstete Waschmaschine und ein Verfahren zu schaffen, die gegenüber dem Stand der Technik Vorteile insbesondere hinsichtlich Aufbau, Automatisierung, Waschleistung, Funktionsweise und/oder Ressourceneffizienz bieten.

Gelöst wird diese Aufgabe durch eine Mischvorrichtung mit den Merkmalen des Anspruchs 1, durch eine Waschmaschine mit den Merkmalen des Anspruchs 11 und durch ein Verfahren mit den Merkmalen des Anspruchs 13. Vorteilhafte sowie bevorzugte Ausgestaltungen der Erfindung sind Gegenstand der weiteren Ansprüche und werden im Folgenden näher erläutert. Dabei werden manche der Merkmale nur für die Mischvorrichtung, nur für die Waschmaschine oder nur für das Verfahren beschrieben. Sie sollen jedoch unabhängig davon sowohl für eine Mischvorrichtung als auch für eine Waschmaschine und für ein Verfahren selbständig und unabhängig voneinander gelten können. Der Wortlaut der Ansprüche wird durch ausdrückliche Bezugnahme zum Inhalt der Beschreibung gemacht.

Die erfindungsgemäße Mischvorrichtung zum Durchmischen eines Zusatzstoffes mit einer Flüssigkeit, vorzugsweise Wasser, in einer Waschmaschine weist eine Hauptleitung auf, in der die Flüssigkeit entlang einer Fließrichtung strömt. Bei den Zusatzstoffen kann es sich um, insbesondere flüssige, Waschmittel oder Teile von Waschmitteln handeln. Die Hauptleitung weist einen Zulauf und einen Auslauf, um die durch die Hauptleitung geleitete Flüssigkeit abzuführen, sowie an einem Anfang und an einem Ende jeweils ein Drei-Wege-Ventil auf. Die Mischvorrichtung weist weiter eine Nebenleitung, die an beiden Enden über die Drei-Wege-Ventile mit der Hauptleitung verbunden ist und dadurch einen Mischkreislauf bildet, und eine Pumpe auf, mit welcher die Flüssigkeit durch die Hauptleitung und durch die Nebenleitung im Mischkreislauf gepumpt werden kann. Zudem weist die Mischvorrichtung wenigstens eine Zusatzstoffeinlassöffnung an der Hauptleitung zum Zugeben eines Zusatzstoffes in eine Mischzone der Hauptleitung und wenigstens ein Verwirbelungsmittel in der Hauptleitung auf. An der Zusatzstoffeinlassöffnung ist vorzugsweise eine Dosiervorrichtung angeschlossen. Mit solch einer Dosiervorrichtung können beispielsweise aufgrund von Unverträglichkeiten verschiedener Zusatzstoffe untereinander diese getrennt gelagert und getrennt zugeführt werden. Zudem ermöglicht dies die Zufuhr von definierten Mengen von Zusatzstoffen in die Mischvorrichtung und somit in die Trommel der Waschmaschine.

Die Hauptleitung weist insbesondere eine Länge von maximal 80 cm, vorzugsweise von maximal 40 cm, und/oder von mindestens 10 cm, vorzugsweise von mindestens 15 cm, auf. Die Länge und auch der Verlauf der Hauptleitung können an den zur Verfügung stehenden Bauraum angepasst sein.

Eine derartige erfindungsgemäße Mischvorrichtung ermöglicht die Durchmischung von Waschsubstanzen bzw. Zusatzstoffen mit der Flüssigkeit zu optimieren, wodurch sich die Waschleistung der Waschmaschine verbessert. Zudem ermöglicht die Mischvorrichtung die Bereitstellung eines angepassten Mischprozesses unabhängig vom laufenden Wachprozess und die Kontrolle von Störgrößen, wie beispielsweise die Schaumentstehung durch die Vermeidung von Luft in der Mischvorrichtung. Die Verwirbelungsmittel der Mischvorrichtung führen einerseits zu einer besseren Durchmischung und vermeiden andererseits eine Entmischung der Zusatzstoffe. Hierfür werden gezielt Scherkräfte eingesetzt. Die Mischvorrichtung kann dabei als vorgefertigte Baueinheit ausgeführt sein, die auf einfache Art und Weise in einer Waschmaschine montiert werden kann. Insbesondere kann durch einen kompakten Aufbau der Mischvorrichtung diese zum Beispiel in bzw. anstelle der Schublade bzw. dem Waschmittelbehälter im oberen Bereich bestehender Waschmaschinen eingebaut bzw. nachgerüstet werden. In diesem Fall wird die Mischvorrichtung in den bereits vorhandenen Bauraum eingesetzt, wobei keine großen konstruktiven Änderungen der Waschmaschine erforderlich sind. Dies ermöglicht nicht nur eine erleichterte Montage im Herstellungsprozess der Waschmaschine, sondern auch einen leichten Zugang für Wartung und Reparatur.

In einer Weiterbildung der Erfindung ist das wenigstens eine Verwirbelungsmittel zwischen der wenigstens einen Zusatzstoffeinlassöffnung und der Pumpe angeordnet. Dies stellt eine konstruktiv und funktionell vorteilhafte Realisierung für die Auslegung und die Funktion der Mischvorrichtung dar. Dabei kann die Pumpe so gesteuert werden, dass Verwirbelungen innerhalb der Mischvorrichtung auftreten. Das wenigstens eine Verwirbelungsmittel ist vorzugsweise in der Mischzone der Hauptleitung angeordnet.

In einer Weiterbildung der Erfindung ist ein Abstand zwischen der wenigstens einen Zusatzstoffeinlassöffnung und dem wenigstens einen Verwirbelungsmittel kleiner als 10 cm. Dies wirkt sich vorteilhaft auf die Durchmischung von Zusatzstoffen aus, insbesondere bei hochviskosen Zusatzstoffen, wie beispielsweise hochviskosen Tensidkonzentrationen. Der Abstand zwischen der wenigstens einen Zusatzstoffeinlassöffnung und dem wenigstens einen Verwirbelungsmittel ist vorzugsweise kleiner als 5 cm oder kleiner als 2 cm.

In einer Weiterbildung der Erfindung ist das wenigstens eine Verwirbelungsmittel eine Änderung eines Innendurchmessers und/oder einer Durchflussquerschnittsfläche der Hauptleitung. Durch die Änderung der Geometrie der Hauptleitung werden in der Mischzone die für die Durchmischung notwendigen Scherkräfte erreicht. Aufgrund der Fluidgeschwindigkeit kommt es an den Übergängen der Innenkontur zu Verwirbelungen. Dieser Bereich kann auch als Verwirbelungszone bezeichnet werden. In der Verwirbelungszone sind die durch die Zusatzstoffeinlassöffnung zugeführten Zusatzstoffe je nach Volumenstrom unterschiedlichen Scherkräften ausgesetzt. Die Durchflussquerschnittsfläche der Hauptleitung wird vorzugsweise entlang der Fließrichtung größer, wobei insbesondere die Durchflussquerschnittsfläche erst größer und dann wieder kleiner wird. Die Änderung des Innendurchmessers und/oder der Durchflussquerschnittsfläche der Hauptleitung erfolgt vorzugsweise stufenartig. Die Hauptleitung weist vorzugsweise als Verwirbelungsmittel eine konische Form auf.

In einer Ausgestaltung der Erfindung sind mehrere Änderungen des Innendurchmessers und/oder der Durchflussquerschnittsfläche der Hauptleitung hintereinander entlang der Fließrichtung angeordnet. Dies stellt eine konstruktiv und funktionell vorteilhafte Realisierung der Mischvorrichtung dar, indem durch die Aneinanderreihung mehrerer Verwirbelungsmittel die Durchmischung in der Mischvorrichtung weiter optimiert wird. Zudem kann dadurch auch die Schmutzanhaftung in der Hauptleitung reduziert werden. Die mehreren Änderungen des Innendurchmessers bzw. der Durchflussquerschnittsfläche der Hauptleitung sind vorzugsweise gleichartig.

In einer Weiterbildung der Erfindung ist das wenigstens eine Verwirbelungsmittel ein Rotor, der an der Pumpe angeordnet ist. Dies stellt eine konstruktiv und funktionell vorteilhafte Realisierung der Mischvorrichtung dar, da durch den Rotor die Durchmischung von Zusatzstoffen, insbesondere von hochviskosen Zusatzstoffen, weiter verbessert wird. Der Rotor ist vorzugsweise an einer Drehwelle der Pumpe mit einem Pumpenrotor oder einem Impeller zum Antrieb des Rotors angeordnet. Der Rotor ist vorzugsweise in einem geringen Abstand zu der Zusatzstoffeinlassöffnung angeordnet. Zudem kann mit der Pumpe in einer umgekehrten Strömungsrichtung die Stärke der Scherkräfte kontrolliert werden.

In einer Weiterbildung der Erfindung sind an der Hauptleitung in der Mischzone mehrere Zusatzstoffeinlassöffnungen angeordnet. Dies ermöglicht mehrere, verschiedene Zusatzstoffe örtlich getrennt in die Hauptleitung zu fördern, ohne dass sich diese gegenseitig beeinflussen. Die mehreren Zusatzstoffeinlassöffnungen sind vorzugsweise in einer Umfangsrichtung und/oder entlang der Fließrichtung zueinander versetzt angeordnet.

In einer Weiterbildung der Erfindung ist die Mischvorrichtung mit einer Frischwasserleitung verbunden. Dies stellt eine konstruktiv und funktionell vorteilhafte Realisierung der Mischvorrichtung dar, wodurch das Volumen von Frischwasser steuerbar ist und somit die Ressourceneffizienz optimiert wird. Die Frischwasserleitung liegt vorzugsweise direkt am Mischkreislauf an.

In einer Weiterbildung der Erfindung ist die Hauptleitung in der Mischzone formveränderlich. Dies stellt eine konstruktiv und funktionell vorteilhafte Realisierung der Mischvorrichtung dar, wodurch die Hauptleitung in ihrer Form so verändert werden kann, dass keine geradlinige Form vorliegt und dadurch entsprechende Bereiche mit turbulenter Strömung entstehen. Die Hauptleitung in der Mischzone kann vorzugsweise mittels Aktoren verformt werden, wobei die Hauptleitung insbesondere als flexibler Schlauch ausgebildet ist und die Aktoren dazu ausgebildet sind, die Hauptleitung zu verbiegen und/oder einen Querschnitt der Hauptleitung zu verändern.

In einer nicht erfindungsgemäßen Ausführung ist die Pumpe eine Hauptpumpe für die Wasserführung in der Waschmaschine. In anderen Worten: Die Mischvorrichtung benötigt keine separate, zusätzliche Pumpe, sondern greift in einem in die Waschmaschine eingebauten Zustand auf die bereits in der Waschmaschine vorhandene Hauptpumpe zurück. Dies gilt insbesondere bei einem Einbau der Mischvorrichtung in einem unteren Bereich der Waschmaschine unterhalb einer Trommel.

In einer Weiterbildung der Erfindung ist die Pumpe eine Zusatzpumpe für den Mischkreislauf der Mischvorrichtung. In anderen Worten: Die Pumpe der Mischvorrichtung ist eine separate, zusätzliche Pumpe zu der bereits in der Waschmaschine vorhandenen Pumpe. Die Zusatzpumpe ist insbesondere bei einem Einbau der Mischvorrichtung in einem oberen Bereich der Waschmaschine oberhalb einer Trommel vorgesehen, wobei die Waschmaschine eine weitere Hauptpumpe für die Wasserführung in der Waschmaschine aufweist.

In einer Ausgestaltung der Erfindung ist die Pumpe dazu eingerichtet, die Fließrichtung im Mischkreislauf zu ändern. Durch die Änderung der Fließrichtung im Mischkreislauf ist eine Umwälzung möglich, wodurch die Durchmischung in der Mischvorrichtung weiter verbessert wird.

In einer Weiterbildung der Erfindung weist die Mischvorrichtung eine Heiz- und/oder Kühleinrichtung zum Aufheizen und Abkühlen der Flüssigkeit in der Hauptleitung auf. Dies stellt eine konstruktiv und funktionell vorteilhafte Realisierung der Mischvorrichtung dar, indem durch die Heiz- und/oder Kühleinrichtung die Durchmischung und die Applikation von Zusatzstoffen verbessert wird, insbesondere durch eine Anpassung der Temperatur in Abstimmung mit der Temperatur der Waschtrommel. Dadurch kann die Mischvorrichtung definierte Rahmenbedingungen, also eine definierte Temperatur, für die Mischung bereitstellen. Die Heiz- und/oder Kühleinrichtung weist vorzugsweise ein Peltier-Element auf und liegt direkt an der Hauptleitung an, insbesondere unmittelbar an der Zusatzstoffeinlassöffnung des zugeführten Zusatzstoffes.

In einer Weiterbildung der Erfindung weist die Mischvorrichtung mindestens einen zusätzlichen Flüssigkeitsbehälter auf, der über wenigstens ein Ventil mit dem Mischkreislauf zu- und abschaltbar verbunden ist. Dadurch ist es möglich, ein Volumen des Mischkreislaufs bzw. der Waschlauge flexibel auf den Waschprozess einzustellen, wobei das notwendige Volumen für die Aufbringung auf die Wäsche zum Beispiel je nach der Beladungsmenge und der Textilart unterschiedlich ist. Der mindestens eine zusätzliche Flüssigkeitsbehälter ist vorzugsweise in einer weiteren Leitung parallel zu der Hauptleitung und der Nebenleitung angeordnet. Bei mehreren zusätzlichen Flüssigkeitsbehälter können diese jeweils unabhängig voneinander zu- und abgeschaltet werden. Ein Volumen des Mischkreislaufs kann von 0,05 l bis 2 l, bevorzugt von 0,2 l bis 1 l, betragen.

Die Temperatur und/oder das Volumen der Flüssigkeit bzw. der Waschlauge im Mischkreislauf kann an die jeweilige Charakteristik der Zusatzstoffe und/oder an ein Waschprogramm angepasst sein.

Die erfindungsgemäße Waschmaschine weist eine drehbare Trommel mit einer wasserdurchlässigen Wandung samt Trommelantrieb zu deren Drehung, und einen Trommelbehälter auf, in dem die Trommel angeordnet ist, wobei der Trommelbehälter die Trommel umgibt. Die Waschmaschine weist eine Einlaufvorrichtung, um Wasser in die Trommel auf darin befindliche Wäsche einzubringen, eine Pumpe und Wasserleitungen auf, um Wasser zu der Einlaufvorrichtung zu pumpen. Zudem ist eine Heizeinrichtung zum Aufheizen von Wasser vorgesehen, wobei die Heizeinrichtung fluidleitend mit der Pumpe verbunden ist. Weiter weist die Waschmaschine eine Dosiervorrichtung zum Zugeben von Zusatzstoffen und die vorbeschriebene erfindungsgemäße Mischvorrichtung auf, wobei die Mischvorrichtung fluidverbunden zwischen der Dosiervorrichtung und der Einlaufvorrichtung einerseits und zwischen einer Wasserzufuhr und der Einlaufvorrichtung andererseits angeordnet ist. Bei dieser Wasserzufuhr kann es sich zum Beispiel um eine Frischwasserzufuhr oder um eine Wasserzufuhr ausgehend von der Waschtrommel handeln. Des Weiteren weist die Waschmaschine eine Waschmaschinensteuerung auf, die mit der Pumpe, der Heizeinrichtung, dem Trommelantrieb sowie der Mischvorrichtung und der Dosiervorrichtung verbunden ist. Dies ermöglicht eine automatisierte Durchmischung von Zusatzstoffen mit der Flüssigkeit in der Mischvorrichtung.

In einer Weiterbildung der Erfindung ist die Mischvorrichtung in einem oberen Bereich der Waschmaschine oberhalb der Trommel angeordnet. Dies stellt eine konstruktiv und funktionell vorteilhafte Realisierung der Waschmaschine dar, da bei Ausführungen mit einer Mischvorrichtung im oberen Bereich der Waschmaschine der Zugang für Wartung und Reparatur erleichtert wird. Die Mischvorrichtung ist vorzugsweise mit einer DC-Stromversorgung verbunden.

In einer Weiterbildung der Erfindung ist die Mischvorrichtung in einem unteren Bereich der Waschmaschine unterhalb der Trommel angeordnet. Die Mischvorrichtung ist vorzugsweise mit einer AC-Stromversorgung verbunden.

Das erfindungsgemäße Verfahren zum Durchmischen eines Zusatzstoffes mit einer Flüssigkeit erfolgt mit der vorbeschriebenen erfindungsgemäßen Mischvorrichtung oder mit der vorbeschriebenen erfindungsgemäßen Waschmaschine.

In einer Weiterbildung der Erfindung wird die Flüssigkeit mit zumindest einem zugegebenen Zusatzstoff mehrmals durch den Mischkreislauf gepumpt. Dies ermöglicht einerseits eine bessere Durchmischung der Zusatzstoffe in der Flüssigkeit und vermeidet andererseits eine Entmischung derselben. Der Mischkreislauf ist vorzugsweise in sich geschlossenen. Dabei ist eine Umkehr der Fließrichtung im Mischkreislauf möglich.

In einer Weiterbildung der Erfindung wird die mit Zusatzstoff vermischte Flüssigkeit durch mindestens einen zusätzlichen Flüssigkeitsbehälter im Volumen erhöht. Dabei wird die zusätzliche Flüssigkeit aus dem mindestens einen zusätzlichen Flüssigkeitsbehälter im Mischkreislauf mit Zusatzstoff vermischt. Dies ermöglicht, ein vergrößertes Volumen an mit Zusatzstoff vermischter Flüssigkeit in die Trommel einzubringen, wodurch sich die Flexibilität für die Applikation in Abhängigkeit der Programmwahl bzw. der Beladungsmenge erhöht.

In einer Weiterbildung der Erfindung wird eine Temperatur im Mischkreislauf mittels der vorbeschriebenen Heiz- und/oder Kühleinrichtung auf eine für jeweilige Zusatzstoffe abgestimmte Temperatur gebracht. Dies ermöglicht die Bereitstellung von definierten Rahmenbedingungen für die Waschlauge. Die Temperatur im Mischkreislauf wird vorzugsweise mittels eines Temperatursensors überwacht, der insbesondere an der Pumpe oder nahe der Zusatzstoffeinlassöffnung angeordnet ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### Kurzbeschreibung der Zeichnungen

Vorteilhafte Ausführungsformen der Erfindung sind in den Zeichnungen dargestellt. Diese und weitere Ausführungsformen der Erfindung werden nachfolgend näher erläutert. Dabei zeigen:
- Fig. 1: eine schematische Darstellung einer erfindungsgemäßen Waschmaschine mit einer erfindungsgemäßen Mischvorrichtung im oberen Bereich der Waschmaschine,
- Fig. 2: eine schematische Darstellung einer erfindungsgemäßen Waschmaschine mit einer erfindungsgemäßen Mischvorrichtung im unteren Bereich der Waschmaschine,
- Fig. 3: eine schematische Ansicht von vorne auf eine erfindungsgemäße Mischvorrichtung mit einer Hauptleitung, die am Anfang und am Ende jeweils ein Drei-Wege-Ventil aufweist und mit einer Nebenleitung verbunden ist, in welcher eine Pumpe vorgesehen ist,
- Fig. 4: eine schematische Ansicht einer Mischvorrichtung gemäß Fig. 3, wobei die Pumpe in der Hauptleitung vorgesehen ist,
- Fig. 5: eine schematische Ansicht einer nicht erfindungsgemäßen Mischvorrichtung, wobei die Mischvorrichtung keine Zusatzpumpe aufweist, sondern mit einer Hauptpumpe der Waschmaschine fluidverbunden ist,
- Fig. 6: eine schematische Darstellung einer Mischzone in der Hauptleitung einer erfindungsgemäßen Mischvorrichtung, wobei ein Verwirbelungsmittel in Form einer Durchflussquerschnittsflächenvergrößerung vorgesehen ist,
- Fig. 7: eine schematische Darstellung einer Mischzone gemäß Fig. 6, wobei mehrere Verwirbelungsmittel in Form einer Durchflussquerschnittsflächenvergrößerung hintereinander angeordnet sind,
- Fig. 8: eine schematische Darstellung einer Mischzone gemäß Fig. 6, wobei an die Durchflussquerschnittsflächenvergrößerung die Pumpe anliegt, an welcher als weiteres Verwirbelungsmittel ein Rotor angeordnet ist,
- Fig. 9: eine schematische Darstellung einer Mischvorrichtung gemäß Fig. 3, wobei die Hauptleitung in einer Mischzone formveränderlich ist und mittels Aktoren verformt werden kann, wobei die Hauptleitung form unverändert ist,
- Fig. 10: eine schematische Darstellung der Mischvorrichtung von Fig. 9, wobei die Hauptleitung in der Mischzone mittels der Aktoren verformt ist,
- Fig. 11: eine schematische Darstellung einer Mischvorrichtung gemäß Fig. 3, wobei zwei zusätzliche Flüssigkeitsbehälter vorgesehen sind, die über wenigstens ein Ventil mit dem Mischkreislauf zu- und abschaltbar verbunden sind,
- Fig. 12: eine schematische Darstellung einer Mischvorrichtung gemäß Fig. 3, wobei die Hauptleitung austrittseitig mit einer Frischwasserleitung zusammenläuft und in einer Einlaufvorrichtung mündet, und
- Fig. 13: eine schematische Darstellung der Mischvorrichtung von Fig. 12, wobei die Frischwasserleitung an die Nebenleitung angeschlossen ist und damit direkt am Mischkreislauf der Mischvorrichtung anliegt.

### Detaillierte Beschreibung der Ausführungsbeispiele

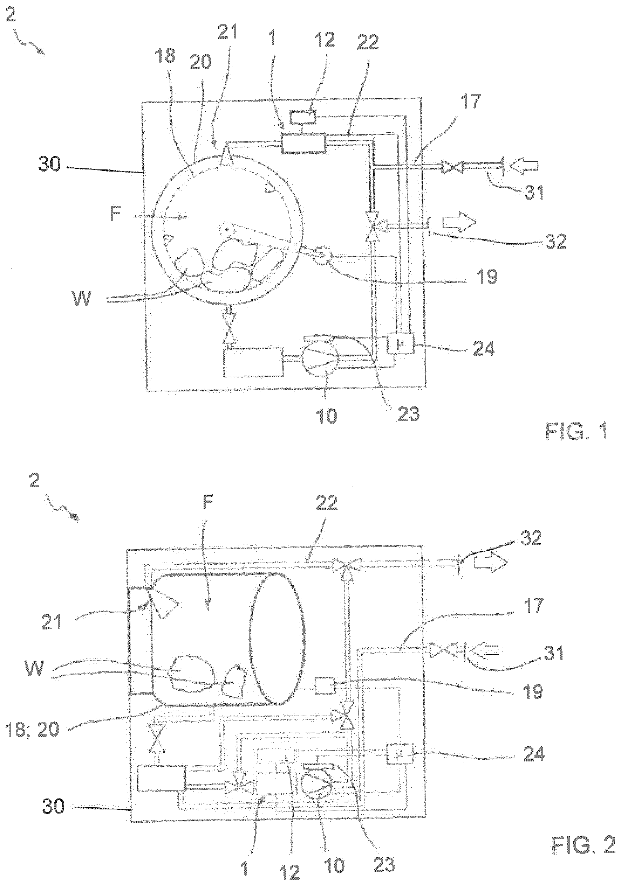

Wie in den Fig. 1 und 2 anhand zweier exemplarischer Ausführungen veranschaulicht ist, weist die erfindungsgemäße Waschmaschine 2 die erfindungsgemäße Mischvorrichtung 1 zum Durchmischen eines Zusatzstoffes mit einer Flüssigkeit F in der Waschmaschine 2 sowie bei den gezeigten Ausführungsbeispielen ein Gehäuse 30, einen Frischwasseranschluss 31 und einen Abwasseranschluss 32 auf. Die Waschmaschine 2 weist eine drehbare Trommel 18 mit einer wasserdurchlässigen Wandung samt Trommelantrieb 19 zu deren Drehung und einen Trommelbehälter 20 auf, in dem die Trommel 18 angeordnet ist, wobei der Trommelbehälter 20 die Trommel 18 umgibt, wie insbesondere in der Fig. 1 ersichtlich ist. Die Waschmaschine 2 weist weiter eine Einlaufvorrichtung 21, um Wasser in die Trommel 18 auf darin befindliche Wäsche W einzubringen, sowie eine Pumpe 10 und Wasserleitungen 22 auf, um Wasser zu der Einlaufvorrichtung 21 zu pumpen. Zudem sind eine Heizeinrichtung 23 zum Aufheizen von Wasser, wobei die Heizeinrichtung 23 fluidleitend mit der Pumpe 10 verbunden ist, eine Dosiervorrichtung 12 zum Zugeben von Zusatzstoffen und eine Waschmaschinensteuerung 24 vorgesehen, die mit der Pumpe 10, der Heizeinrichtung 23, dem Trommelantrieb 19 sowie der Dosiervorrichtung 12 und der Mischvorrichtung 1 verbunden ist. Die Mischvorrichtung 1 ist fluidverbunden zwischen der Dosiervorrichtung 12 und der Einlaufvorrichtung 21 einerseits und zwischen einer Wasserzufuhr, wie bspw. einer Frischwasserleitung 17, und der Einlaufvorrichtung 21 angeordnet, wie in den Fig. 1 und 2 ersichtlich ist. Diese Wasserzufuhr kann sowohl dem Frischwasseranschluss 31 als auch einer Wasserzufuhr ausgehend von der Waschtrommel 18 entsprechen.

Bei den gezeigten Ausführungen ist die Dosiervorrichtung 12 für flüssige Waschmittel bzw. flüssige Teile von Waschmitteln ausgelegt, wobei diese verschiedenen Zusatzstoffe getrennt voneinander gelagert werden. Die Dosiervorrichtung 12 ermöglicht die Zufuhr von definierten Mengen von Zusatzstoffen in die Mischvorrichtung 1 und somit in die Waschtrommel 18 der Waschmaschine 2.

In einer konstruktiv vorteilhaften Ausführung der Waschmaschine 2 ist die Mischvorrichtung 1 in einem oberen Bereich der Waschmaschine 2 oberhalb der Trommel 1 angeordnet, wie dies in der Fig. 1 gezeigt ist. Dabei ist vorzugsweise die Mischvorrichtung 1 mit einer in den Figuren nicht gezeigten DC-Stromversorgung verbunden. Dies erfolgt hier aus Sicherheitsgründen, auch weil eine oben angeordnete Bedieneinrichtung mit DC versorgt wird.

In einer alternativen Ausführung der Waschmaschine 2 ist die Mischvorrichtung 1 in einem unteren Bereich der Waschmaschine 2 unterhalb der Trommel 18 angeordnet ist, wie in der Fig. 2 dargestellt ist. Die Mischvorrichtung 1 ist vorzugsweise mit einer in den Figuren nicht gezeigten AC-Stromversorgung verbunden, da die unten angeordneten Antriebsmotor und Leistungsversorgung dafür sowie Pumpe mit AC versorgt werden.

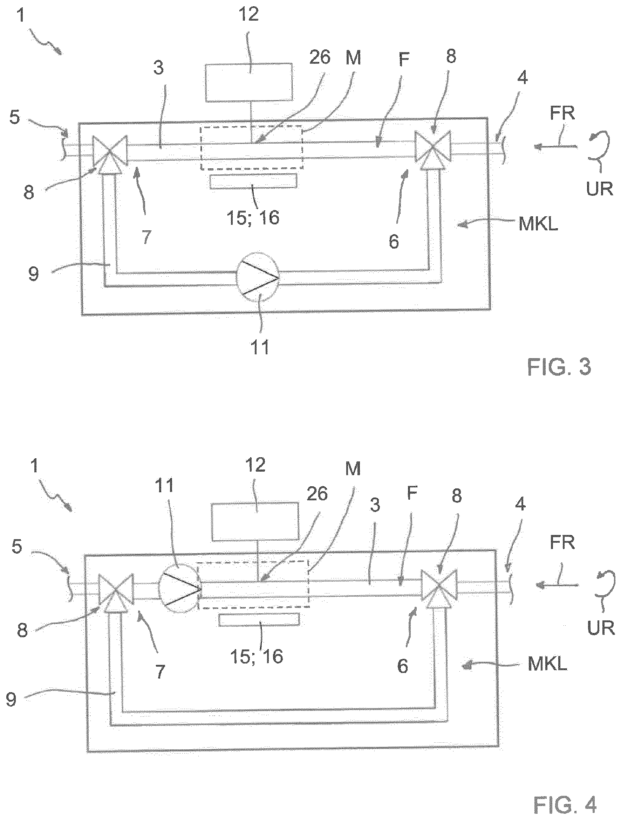

Die erfindungsgemäße Mischvorrichtung 1 weist eine Hauptleitung 3, in der die Flüssigkeit F entlang einer Fließrichtung FR strömt, und eine Nebenleitung 9 auf. Die Hauptleitung 3 weist einen Zulauf 4, einen Auslauf 5, um die durch die Hauptleitung 3 geleitete Flüssigkeit F abzuführen, und an einem Anfang 6 und an einem Ende 7 jeweils ein Drei-Wege-Ventil 8 auf. Die Nebenleitung 9 ist an beiden Enden über die Drei-Wege-Ventile 8 mit der Hauptleitung 3 verbunden und bildet zusammen mit der Hauptleitung 3 einen Mischkreislauf MKL, wie in den Fig. 3 bis 6 gezeigt ist. Die Mischvorrichtung 1 weist weiter eine Pumpe 11 auf, mit welcher die Flüssigkeit F durch die Hauptleitung 3 und durch die Nebenleitung 9 im Mischkreislauf MKL gepumpt werden kann. Zudem ist zum Zugeben eines Zusatzstoffes in eine Mischzone M der Hauptleitung 3 wenigstens eine Zusatzstoffeinlassöffnung 26 an der Hauptleitung 3 vorgesehen. Dabei ist vorzugsweise an der Zusatzstoffeinlassöffnung 26 eine Dosiervorrichtung 12 angeschlossen, wie in den Fig. 3 bis 6 gezeigt ist. Des Weiteren weist die Mischvorrichtung 1 wenigstens ein Verwirbelungsmittel 13 in der Hauptleitung 3 auf.

In einer konstruktiv vorteilhaften Ausführung weist die Hauptleitung 3 eine Länge von mindestens 10 cm, vorzugsweise von mindestens 15 cm, auf und eine Länge von maximal 80 cm, vorzugsweise von maximal 40 cm, auf. Die Länge und auch der Verlauf der Hauptleitung 3 sind vorzugsweise an den zur Verfügung stehenden Bauraum angepasst, welcher unter anderem auch durch die Größe der Dosiervorrichtung 12 bestimmt wird.

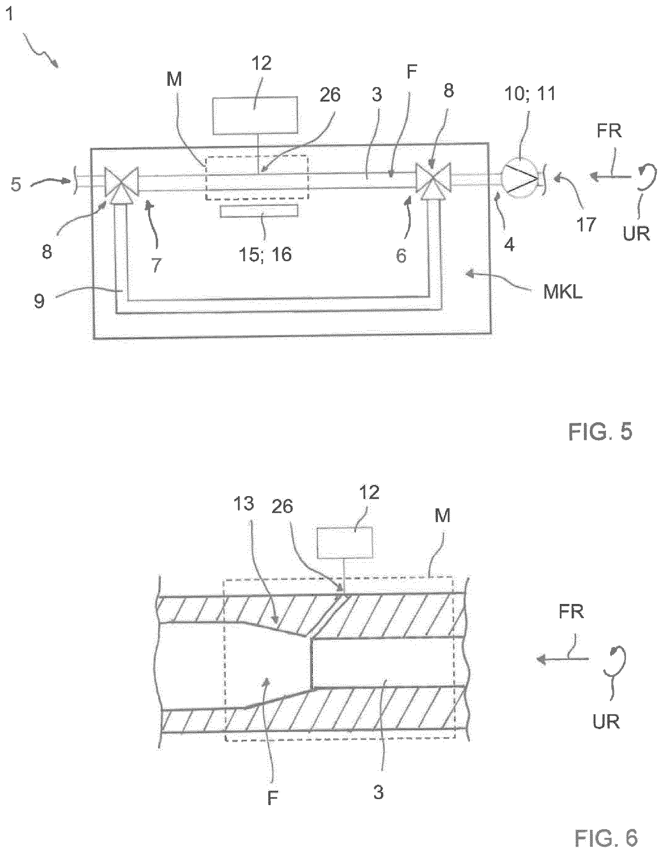

In einer vorteilhaften Realisierung ist das wenigstens eine Verwirbelungsmittel 13 zwischen der wenigstens einen Zusatzstoffeinlassöffnung 26 und der Pumpe 11 angeordnet. Dabei kann die Pumpe 11 so gesteuert werden, dass Verwirbelungen innerhalb der Mischvorrichtung 1 auftreten. Das wenigstens eine Verwirbelungsmittel 13 ist vorzugsweise in der Mischzone M angeordnet, wie in den Fig. 6 bis 10 gezeigt ist.

In vorteilhaften Ausführungen ist ein Abstand zwischen der wenigstens einen Zusatzstoffeinlassöffnung 26 und dem wenigstens einen Verwirbelungsmittel 13 kleiner als 10 cm. Der Abstand zwischen der wenigstens einen Zusatzstoffeinlassöffnung 26 und dem wenigstens einen Verwirbelungsmittel 13 ist vorzugsweise kleiner als 5 cm oder kleiner als 2 cm. Bei den gezeigten Ausführungsformen gemäß der Fig. 6 bis 8 liegt die Zusatzstoffeinlassöffnung 26 unmittelbar an dem Verwirbelungsmittel 13 an.

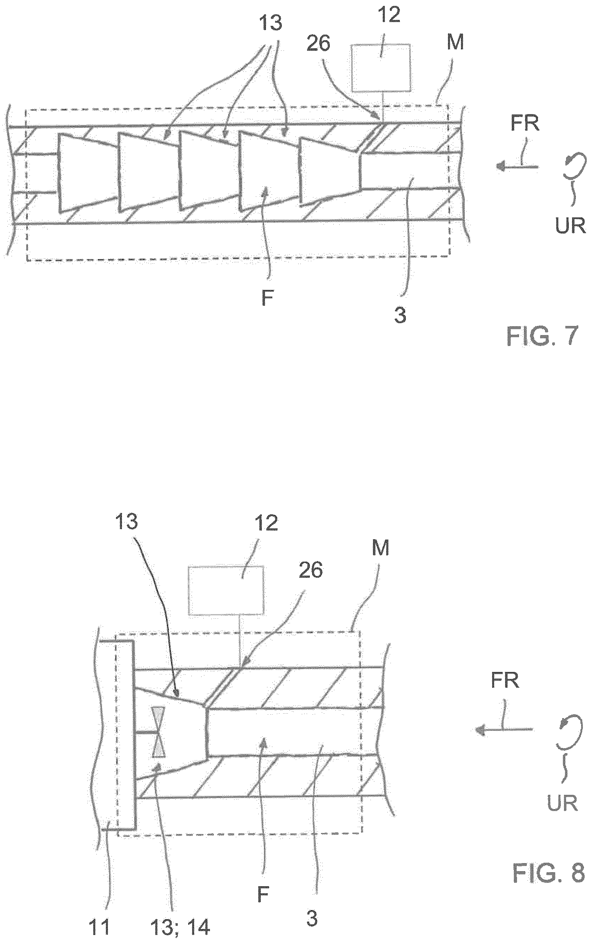

In einer konstruktiv vorteilhaften Ausführung ist das wenigstens eine Verwirbelungsmittel 13 eine Änderung eines Innendurchmessers D_{H} und/oder einer Durchflussquerschnittsfläche A_{H} der Hauptleitung 3, wie in den Fig. 6 bis 8 gezeigt ist. Durch die Verwirbelungsmittel 13 in der Hauptleitung 3 werden in der Mischzone M die für die Durchmischung notwendigen Scherkräfte erreicht. Aufgrund der Fluidgeschwindigkeit in der Hauptleitung 3 kommt es an den Übergängen der Innenkontur zu den gewünschten Verwirbelungen. Die Durchflussquerschnittsfläche A_{H} eines solchen Verwirbelungsmittels 13 wird vorzugsweise entlang der Fließrichtung FR größer, wie in der Fig. 6 gezeigt ist. Insbesondere wird die Durchflussquerschnittsfläche A_{H} erst größer und dann wieder kleiner, wie in der Fig. 7 für mehrere aneinandergereihte Verwirbelungsmittel 13 dargestellt ist. Die Änderung des Innendurchmessers D_{H} und/oder des Durchflussquerschnittsfläche A_{H} der Hauptleitung 3 erfolgt vorzugsweise konisch.

In einer vorteilhaften Realisierung sind mehrere Verwirbelungsmittel 13 bzw. mehrere Änderungen des Innendurchmessers D_{H} und/oder der Durchflussquerschnittsfläche A_{H} der Hauptleitung 3 hintereinander entlang der Fließrichtung FR angeordnet, wie insbesondere in der Fig. 7 gezeigt ist. Bei der in Fig. 7 gezeigten Ausführung sind fünf solcher Verwirbelungsmittel 13 hintereinander angeordnet. Bei nicht gezeigten Ausführungen können nur zwei, drei, vier oder mehr als fünf solcher Verwirbelungsmittel 13 hintereinander angeordnet sein. Die mehreren Änderungen sind vorzugsweise gleichartig.

In einer konstruktiv vorteilhaften Ausführung ist das wenigstens eine Verwirbelungsmittel 13 ein Rotor 14, der an der Pumpe 11 angeordnet ist, wie in der Fig. 8 gezeigt ist. Der Rotor 14 ist vorzugsweise an einer Drehwelle der Pumpe 11 mit einem Pumpenrotor oder einem Impeller zum Antrieb des Rotors 14 angeordnet. Der Rotor 14 ist insbesondere beim Einsatz von hochviskosen Zusatzstoffen vorteilhaft.

Bei der in Fig. 8 gezeigten Ausführung weist die Mischvorrichtung 1 zwei unterschiedliche Verwirbelungsmittel 13 auf, und zwar auf der einen Seite in Form des Rotors 14 und auf der anderen Seite in Form der vorgenannten Änderung der Durchflussquerschnittsfläche A_{H} der Hauptleitung 3.

In vorteilhaften Ausführungsformen sind an der Hauptleitung 3 in der Mischzone M mehrere Zusatzstoffeinlassöffnungen 6 angeordnet. Bei einer nicht gezeigten Ausführung sind vorzugsweise die mehreren Zusatzstoffeinlassöffnungen 6 in einer Umfangsrichtung UR und/oder entlang der Fließrichtung FR zueinander versetzt angeordnet, so dass sich die verschiedenen Zusatzstoffe nicht gegenseitig beeinflussen.

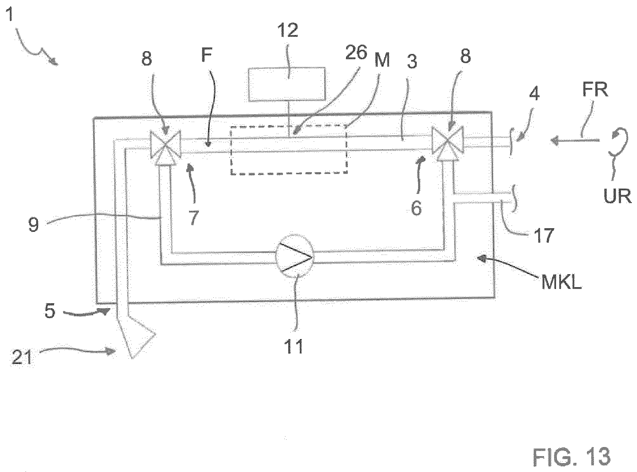

In einer konstruktiv vorteilhaften Ausführung ist die Mischvorrichtung 1 mit einer Frischwasserleitung 17 verbunden. Die Frischwasserleitung 17 liegt vorzugsweise direkt am Mischkreislauf MKL an, wie in der Fig. 13 dargestellt ist. Bei der gezeigten Ausführung ist die Frischwasserleitung 17 mit der Nebenleitung 9 fluidverbunden. Dabei ist die Frischwasserleitung 17 über ein in den Figuren nicht dargestelltes Ventil der Nebenleitung 9 verbunden.

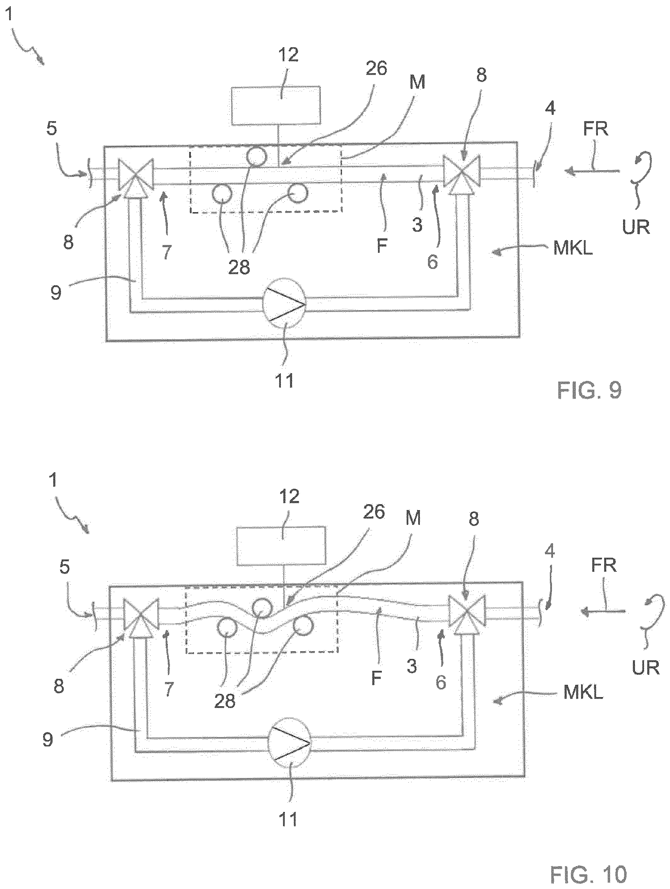

In vorteilhaften Ausführungsformen ist die Hauptleitung 3 in der Mischzone M formveränderlich. Dabei kann vorzugsweise die Hauptleitung 3 mittels Aktoren 28 verformt werden, wie in den Fig. 9 und 10 gezeigt ist. Dabei zeigt die Fig. 9 die Hauptleitung 3 in der Mischzone M in einer unveränderten, geradlinigen Form, wohingegen in der Fig. 10 die Hauptleitung 3 schlangenlinienartig verformt ist. Dadurch kommt es in diesem Bereich zu Verwirbelungen. Insbesondere ist die Hauptleitung 3 als flexibler Schlauch ausgebildet und die Aktoren 28 sind dazu ausgebildet, die Hauptleitung 3 zu verbiegen und/oder einen Querschnitt der Hauptleitung 3 zu verändern.

In einer nicht erfindungsgemäßen Ausführung ist die Pumpe 11 eine Hauptpumpe für die Wasserführung in der Waschmaschine 2. Die Mischvorrichtung 1 benötigt somit keine separate, zusätzliche Pumpe, sondern greift in einem in die Waschmaschine 2 eingebauten Zustand auf die bereits in der Waschmaschine 2 vorhandene Pumpe 10 zurück. Dies gilt insbesondere bei einem Einbau der Mischvorrichtung 1 in einem unteren Bereich der Waschmaschine 2 unterhalb einer Trommel 18.

In einer vorteilhaften Realisierung ist die Pumpe 11 eine Zusatzpumpe für den Mischkreislauf MKL der Mischvorrichtung 1. Die Pumpe 11 der Mischvorrichtung 1 ist eine separate, zusätzliche Pumpe zu der bereits in der Waschmaschine 2 vorhandenen Pumpe 10. Dies gilt insbesondere bei einem Einbau der Mischvorrichtung 1 in einem oberen Bereich der Waschmaschine 2 oberhalb einer Trommel 18, wobei die Waschmaschine 2 eine weitere Hauptpumpe 10 für die Wasserführung in der Waschmaschine 2 aufweist.

In vorteilhaften Ausführungsformen ist die Pumpe 11 dazu eingerichtet, die Fließrichtung FR im Mischkreislauf MKL zu ändern.

In einer konstruktiv vorteilhaften Ausführung weist die Mischvorrichtung 1 eine Heiz- und/oder Kühleinrichtung 15 zum Aufheizen und Abkühlen der Flüssigkeit F in der Hauptleitung 3 auf. Durch die Heiz- und/oder Kühleinrichtung 15 wird die Durchmischung und die Applikation von Zusatzstoffen weiter verbessert, insbesondere durch eine Anpassung der Temperatur in Abstimmung mit der Temperatur der Waschtrommel 18 bzw. einer Wachprogrammvorgabe. Die Heiz- und/oder Kühleinrichtung 15 weist vorzugsweise ein Peltier-Element 16 auf und liegt direkt an der Hauptleitung 3 an, wie in den Fig. 3 bis 5 gezeigt ist. Bei vorteilhaften Ausführungen liegt die Heiz- und/oder Kühleinrichtung 15 unmittelbar an der Zusatzstoffeinlassöffnung 6 des zugeführten Zusatzstoffes an.

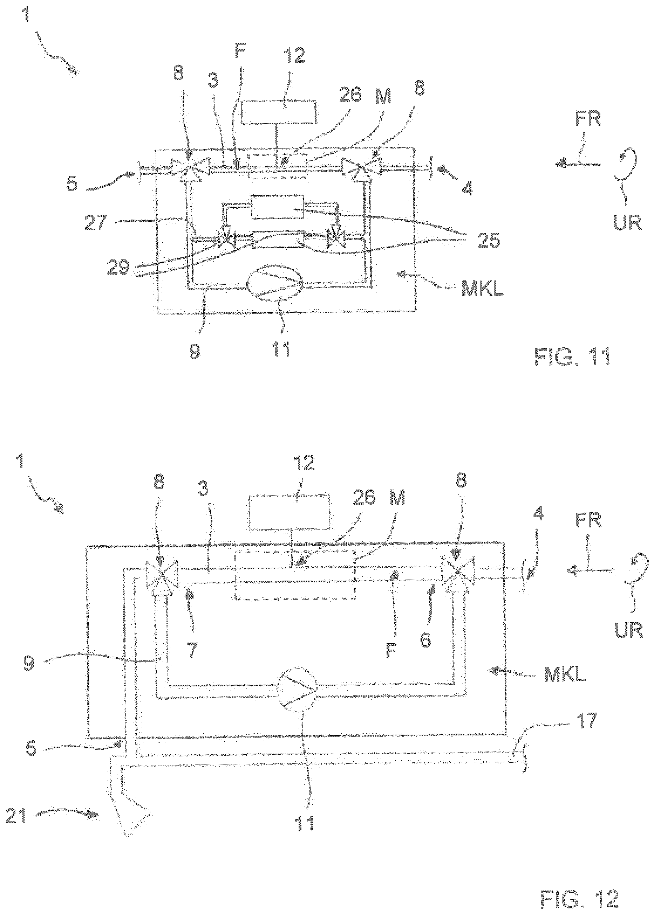

In einer vorteilhaften Realisierung weist die Mischvorrichtung 1 mindestens einen zusätzlichen Flüssigkeitsbehälter 25 auf. Der mindestens eine zusätzliche Flüssigkeitsbehälter 25 ist über wenigstens ein Ventil 29 mit dem Mischkreislauf MKL zu- und abschaltbar verbunden. Dabei ist der mindestens eine zusätzliche Flüssigkeitsbehälter 25 vorzugsweise in einer weiteren Leitung 27 parallel zu der Hauptleitung 3 und der Nebenleitung 9. Bei mehreren zusätzlichen Flüssigkeitsbehälter 25 können diese jeweils unabhängig voneinander zu- und abgeschaltet werden. Ein gesamtes Volumen des Mischkreislaufs MKL kann von 0,05 I bis 2 l, bevorzugt von 0,2 l bis 1 l, betragen. Bei der gezeigten Ausführungsform gemäß Fig. 11 weist die Mischvorrichtung 1 zwei zusätzliche Flüssigkeitsbehälter 25 auf. Bei nicht gezeigten Ausführungen kann die Mischvorrichtung 1 nur einen oder mehr als zwei zusätzliche Flüssigkeitsbehälter 25 aufweisen.

Das erfindungsgemäße Verfahren zum Durchmischen eines Zusatzstoffes mit einer Flüssigkeit F wird mit der vorbeschriebenen erfindungsgemäßen Mischvorrichtung 1 und/oder mit der vorbeschriebenen erfindungsgemäßen Waschmaschine 2 durchgeführt.

In einer vorteilhaften Realisierung wird die Flüssigkeit F mit zumindest einem zugegebenen Zusatzstoff mehrmals durch den Mischkreislauf MKL gepumpt. Der Mischkreislauf MKL ist vorzugsweise in sich geschlossenen, das heißt, der Zulauf 4 und der Auslauf 5 der Hauptleitung 3 sind abgesperrt. Bei wiederholten Durchläufen kann die Durchmischung der Flüssigkeit F mit den zugeführten Zusatzstoffen unterstützt werden. Zudem kann während des Mischvorgangs eine Umkehr der Fließrichtung FR der Flüssigkeit F im Mischkreislauf MKL stattfinden.

In vorteilhaften Ausführungsformen wird die mit Zusatzstoff vermischte Flüssigkeit F durch mindestens einen zusätzlichen Flüssigkeitsbehälter 25 im Volumen erhöht. Dabei wird die zusätzliche Flüssigkeit F aus dem mindestens einen zusätzlichen Flüssigkeitsbehälter 25 im Mischkreislauf MKL mit Zusatzstoff vermischt. Danach wird sämtliche im Mischkreislauf MKL befindliche und mit Zusatzstoff vermischte Flüssigkeit F in die Trommel 18 eingebracht.

In einer vorteilhaften Ausführung wird eine Temperatur im Mischkreislauf MKL mittels der vorbeschriebenen Heiz- und/oder Kühleinrichtung 15 auf eine für jeweilige Zusatzstoffe abgestimmte Temperatur gebracht. Dabei wird vorzugsweise die Temperatur im Mischkreislauf MKL mittels eines in den Figuren nicht dargestellten Temperatursensors überwacht. Bei bevorzugten Ausführungen ist der Temperatursensor an der Pumpe 11 oder nahe der Zusatzstoffeinlassöffnung 26 angeordnet.

Wie die gezeigten und die weiteren oben erwähnten Ausführungsbeispiele deutlich machen, stellt die Erfindung eine Mischvorrichtung, eine Waschmaschine und ein Verfahren zur Verfügung, die gegenüber herkömmlichen Vorrichtungen bzw. Verfahren Vorteile insbesondere hinsichtlich Aufbau, Automatisierung, Waschleistung, Funktionsweise und/oder Ressourceneffizienz bieten.

## Patentansprüche

1. Mischvorrichtung (1) zum Durchmischen eines Zusatzstoffes mit einer Flüssigkeit (F) in einer Waschmaschine (2), aufweisend:
- eine Hauptleitung (3), in der die Flüssigkeit (F) entlang einer Fließrichtung (FR) strömt, wobei die Hauptleitung (3) einen Zulauf (4) und einen Auslauf (5) aufweist, um die durch die Hauptleitung (3) geleitete Flüssigkeit (F) abzuführen,
- eine Nebenleitung (9), die zusammen mit der Hauptleitung (3) einen Mischkreislauf (MKL) bildet,
- eine Pumpe (11), mit welcher die Flüssigkeit (F) durch die Hauptleitung (3) und durch die Nebenleitung (9) im Mischkreislauf (MKL) gepumpt werden kann,
- wenigstens eine Zusatzstoffeinlassöffnung (26) an der Hauptleitung (3) zum Zugeben eines Zusatzstoffes in eine Mischzone (M) der Hauptleitung (3), wobei vorzugsweise an der Zusatzstoffeinlassöffnung (26) eine Dosiervorrichtung (12) angeschlossen ist, und
**dadurch gekennzeichnet, dass**
- die Hauptleitung (3) an einem Anfang (6) und an einem Ende (7) jeweils ein Drei-Wege-Ventil (8) aufweist,
- die Nebenleitung (9) über die Drei-Wege-Ventile (8) mit der Hauptleitung (3) verbunden ist, und
- die Mischvorrichtung (1) wenigstens ein Verwirbelungsmittel (13) in der Hauptleitung (3) aufweist.

2. Mischvorrichtung (1) nach Anspruch 1, **dadurch gekennzeichnet, dass** das wenigstens eine Verwirbelungsmittel (13) zwischen der wenigstens einen Zusatzstoffeinlassöffnung (26) und der Pumpe (11) angeordnet ist, insbesondere in der Mischzone (M) angeordnet ist.

3. Mischvorrichtung (1) nach Anspruch 1 oder 2, **dadurch gekennzeichnet, dass** ein Abstand zwischen der wenigstens einen Zusatzstoffeinlassöffnung (26) und dem wenigstens einen Verwirbelungsmittel (13) kleiner als 10 cm ist, vorzugsweise kleiner als 5 cm oder kleiner als 2 cm.

4. Mischvorrichtung (1) nach einem der vorhergehenden Ansprüche, **dadurch gekennzeichnet, dass** das wenigstens eine Verwirbelungsmittel (13) eine Änderung eines Innendurchmessers (D_{H}) und/oder einer Durchflussquerschnittsfläche (A_{H}) der Hauptleitung (3) ist, wobei vorzugsweise entlang der Fließrichtung (FR) die Durchflussquerschnittsfläche (A_{H}) größer wird und dann wieder kleiner wird, wobei insbesondere mehrere Änderungen des Innendurchmessers (D_{H}) und/oder der Durchflussquerschnittsfläche (A_{H}) der Hauptleitung (3) hintereinander entlang der Fließrichtung (FR) angeordnet sind.

5. Mischvorrichtung (1) nach einem der vorhergehenden Ansprüche, **dadurch gekennzeichnet, dass** das wenigstens eine Verwirbelungsmittel ein Rotor (14) ist, der an der Pumpe (11) angeordnet ist, vorzugsweise an einer Drehwelle der Pumpe (11) mit einem Pumpenrotor oder einem Impeller zum Antrieb des Rotors (14).

6. Mischvorrichtung (1) nach einem der vorhergehenden Ansprüche, **dadurch gekennzeichnet, dass** an der Hauptleitung (3) in der Mischzone (M) mehrere Zusatzstoffeinlassöffnungen (26) angeordnet sind, die vorzugsweise in einer Umfangsrichtung (UR) und/oder entlang der Fließrichtung (FR) zueinander versetzt angeordnet sind.

7. Mischvorrichtung (1) nach einem der vorhergehenden Ansprüche, **dadurch gekennzeichnet, dass** die Mischvorrichtung (1) mit einer Frischwasserleitung (17) verbunden ist, wobei die Frischwasserleitung (17) vorzugsweise direkt am Mischkreislauf (MKL) anliegt.

8. Mischvorrichtung (1) nach einem der vorhergehenden Ansprüche, **dadurch gekennzeichnet, dass** die Hauptleitung (3) in der Mischzone (M) formveränderlich ist, und vorzugsweise mittels Aktoren (28) verformt werden kann, wobei die Hauptleitung (3) insbesondere als flexibler Schlauch ausgebildet ist und die Aktoren (28) dazu ausgebildet sind, die Hauptleitung (3) zu verbiegen und/oder einen Querschnitt der Hauptleitung (3) zu verändern.

9. Mischvorrichtung (1) nach einem der vorhergehenden Ansprüche, **dadurch gekennzeichnet, dass** die Pumpe (11) eine Zusatzpumpe für den Mischkreislauf (MKL) der Mischvorrichtung (1) ist, insbesondere bei einem Einbau der Mischvorrichtung (1) in einem oberen Bereich der Waschmaschine (2) oberhalb einer Trommel (18), wobei die Waschmaschine (2) eine weitere Hauptpumpe (10) für die Wasserführung in der Waschmaschine (2) aufweist, wobei vorzugsweise die Pumpe (11) dazu eingerichtet ist, die Fließrichtung (FR) im Mischkreislauf (MKL) zu ändern.

10. Mischvorrichtung (1) nach einem der vorhergehenden Ansprüche, **dadurch gekennzeichnet, dass** die Mischvorrichtung (1) mindestens einen zusätzlichen Flüssigkeitsbehälter (25) aufweist, der über wenigstens ein Ventil (29) mit dem Mischkreislauf (MKL) zu- und abschaltbar verbunden ist, vorzugsweise in einer weiteren Leitung (27) parallel zu der Hauptleitung (3) und der Nebenleitung (9).

11. Waschmaschine (2), aufweisend:
- eine drehbare Trommel (18) mit einer wasserdurchlässigen Wandung samt Trommelantrieb (19) zu deren Drehung,
- einen Trommelbehälter (20), in dem die Trommel (18) angeordnet ist, wobei der Trommelbehälter (20) die Trommel (18) umgibt,
- eine Einlaufvorrichtung (21), um Wasser in die Trommel (18) auf darin befindliche Wäsche (W) einzubringen,
- eine Pumpe (10) und Wasserleitungen (22), um Wasser zu der Einlaufvorrichtung (21) zu pumpen,
- eine Heizeinrichtung (23) zum Aufheizen von Wasser, wobei die Heizeinrichtung (23) fluidleitend mit der Pumpe (10) verbunden ist,
- eine Dosiervorrichtung (12) zum Zugeben von Zusatzstoffen,
- , und
- eine Waschmaschinensteuerung (24), die mit der Pumpe (10), der Heizeinrichtung (23), dem Trommelantrieb (19) und der Dosiervorrichtung (12) verbunden ist,
**gekennzeichnet durch**
- eine Mischvorrichtung (1) nach einem der Ansprüche 1 bis 10, wobei die Mischvorrichtung fluidverbunden zwischen der Pumpe (10) und der Einlaufvorrichtung (21) angeordnet ist und mit der Waschmaschinensteuerung (24) verbunden ist.

12. Waschmaschine (2) nach Anspruch 11, **dadurch gekennzeichnet, dass** die Mischvorrichtung (1) in einem oberen Bereich der Waschmaschine (2) oberhalb der Trommel (18) angeordnet ist, wobei die Mischvorrichtung (1) vorzugsweise mit einer DC-Stromversorgung verbunden ist, oder dass die Mischvorrichtung (1) in einem unteren Bereich der Waschmaschine (2) unterhalb der Trommel (18) angeordnet ist, wobei die Mischvorrichtung (1) vorzugsweise mit einer AC-Stromversorgung verbunden ist.

13. Verfahren zum Durchmischen eines Zusatzstoffes mit einer Flüssigkeit (F), **dadurch gekennzeichnet, dass** das Verfahren mit einer Mischvorrichtung (1) nach einem der Ansprüche 1 bis 10 oder mit einer Waschmaschine (2) nach einem der Ansprüche 11 oder 12 erfolgt.

14. Verfahren nach Anspruch 13, **dadurch gekennzeichnet, dass** die Flüssigkeit (F) mit zumindest einem zugegebenen Zusatzstoff mehrmals durch den Mischkreislauf (MKL) gepumpt wird und/oder dass die mit Zusatzstoff vermischte Flüssigkeit (F) durch mindestens einen zusätzlichen Flüssigkeitsbehälter (25) im Volumen erhöht wird, wobei die zusätzliche Flüssigkeit (F) aus dem mindestens einen zusätzlichen Flüssigkeitsbehälter (25) im Mischkreislauf (MKL) mit Zusatzstoff vermischt wird, und dann sämtliche im Mischkreislauf (MKL) befindliche und mit Zusatzstoff vermischte Flüssigkeit (F) in die Trommel (18) eingebracht wird.

15. Verfahren nach Anspruch 13 oder 14, **dadurch gekennzeichnet, dass** eine Temperatur im Mischkreislauf (MKL) mittels einer Heiz- und/oder Kühleinrichtung (15) auf eine für jeweilige Zusatzstoffe abgestimmte Temperatur gebracht wird, wobei vorzugsweise die Temperatur im Mischkreislauf (MKL) mittels eines Temperatursensors überwacht wird, der insbesondere an der Pumpe (11) oder nahe der Zusatzstoffeinlassöffnung (26) angeordnet ist.

## Claims

1. A mixing device (1) for mixing an additive with a liquid (F) in a washing machine (2), comprising:
- a main line (3) in which the liquid (F) flows in a flow direction (FR), the main line (3) having an inlet (4) and an outlet (5) to discharge the liquid (F) conducted through the main line (3),
- a secondary line (9) which together with the main line (3) forms a mixing circuit (MKL),
- a pump (11) using which the liquid (F) can be pumped through the main line (3) and through the secondary line (9) in the mixing circuit (MKL),
- at least one additive inlet opening (26) on the main line (3) for adding an additive into a mixing zone (M) of the main line (3), with a metering device (12) being preferably connected to the additive inlet opening (26), and
**characterized in that**
- the main line (3) has a three-way valve (8) at a beginning (6) and at an end (7),
- the secondary line (9) is connected to the main line (3) via the three-way valves (8), and
- the mixing device (1) has at least one swirling means (13) in the main line (3).

2. The mixing device (1) according to claim 1, **characterized in that** the at least one swirling means (13) is arranged between the at least one additive inlet opening (26) and the pump (11), in particular is arranged in the mixing zone (M).

3. The mixing device (1) according to claim 1 or 2, **characterized in that** a distance between the at least one additive inlet opening (26) and the at least one swirling means (13) is less than 10 cm, preferably less than 5 cm or less than 2 cm.

4. The mixing device (1) according to one of the preceding claims, **characterized in that** the at least one swirling means (13) is a change in an inner diameter (D_{H}) and/or a sectional area of flow (A_{H}) of the main line (3), the sectional area of flow (A_{H}) preferably becoming larger and then smaller again in the flow direction (FR), with, in particular, multiple changes in the inner diameter (D_{H}) and/or the sectional area of flow (A_{H}) of the main line (3) being arranged one after the other in the flow direction (FR).

5. The mixing device (1) according to one of the preceding claims, **characterized in that** the at least one swirling means is a rotor (14) which is arranged on the pump (11), preferably on a rotating shaft of the pump (11) with a pump rotor or an impeller for driving the rotor (14).

6. The mixing device (1) according to one of the preceding claims, **characterized in that** multiple additive inlet openings (26) are arranged on the main line (3) in the mixing zone (M), which are preferably arranged offset from one another in a peripheral direction (UR) and/or in the flow direction (FR).

7. The mixing device (1) according to one of the preceding claims, **characterized in that** the mixing device (1) is connected to a fresh-water line (17), the fresh-water line (17) preferably directly abutting the mixing circuit (MKL).

8. The mixing device (1) according to one of the preceding claims, **characterized in that** the main line (3) is shape-changeable in the mixing zone (M) and can preferably be deformed by means of actuators (28), the main line (3) being in particular designed as a flexible hose and the actuators (28) being designed to bend the main line (3) and/or to change a cross section of the main line (3).

9. The mixing device (1) according to one of the preceding claims, **characterized in that** the pump (11) is an additional pump for the mixing circuit (MKL) of the mixing device (1), particularly when the mixing device (1) is installed in an upper region of the washing machine (2) above a drum (18), the washing machine (2) having a further main pump (10) for the water supply in the washing machine (2), preferably the pump (11) being designed to change the flow direction (FR) in the mixing circuit (MKL).

10. The mixing device (1) according to one of the preceding claims, **characterized in that** the mixing device (1) has at least one additional liquid container (25) which is connected to the mixing circuit (MKL) via at least one valve (29) and can be switched on and off, preferably being positioned in a further line (27) in parallel with the main line (3) and the secondary line (9).

11. A washing machine (2), comprising:
- a rotatable drum (18) having a water-permeable wall including a drum drive (19) to rotate the drum,
- a drum container (20) in which the drum (18) is arranged, the drum container (20) surrounding the drum (18),
- an inlet device (21) to introduce water into the drum (18) and onto the laundry (W) contained therein,
- a pump (10) and water pipes (22) to pump water to the inlet device (21),
- a heating apparatus (23) for heating water, the heating apparatus (23) being fluid-conductingly connected to the pump (10),
- a metering device (12) for adding additives,
- , and
- a washing machine control unit (24) which is connected to the pump (10), the heating apparatus (23), the drum drive (19) and the metering device (12),
**characterized by**
- a mixing device (1) according to one of claims 1 to 10, the mixing device being arranged fluid-connectedly between the pump (10) and the inlet device (21) and being connected to the washing machine control unit (24).

12. The washing machine (2) according to claim 11, **characterized in that** the mixing device (1) is arranged in an upper region of the washing machine (2) above the drum (18), the mixing device (1) being preferably connected to a DC power supply, or **in that** the mixing device (1) is arranged in a lower region of the washing machine (2) below the drum (18), the mixing device (1) being preferably connected to an AC power supply.

13. A method for mixing an additive with a liquid (F), **characterized in that** the method is carried out using a mixing device (1) according to one of claims 1 to 10 or using a washing machine (2) according to one of claims 11 or 12.

14. The method according to claim 13, **characterized in that** the liquid (F) containing at least one added additive is pumped through the mixing circuit (MKL) multiple times and/or **in that** the volume of the liquid (F) mixed with additive is increased by at least one additional liquid container (25), the additional liquid (F) from the at least one additional liquid container (25) being mixed with additive in the mixing circuit (MKL), and then all the liquid (F) in the mixing circuit (MKL) and mixed with additive being introduced into the drum (18).

15. The method according to claim 13 or 14, **characterized in that** a temperature in the mixing circuit (MKL) is brought to a temperature adapted for the respective additives by means of a heating and/or cooling apparatus (15), the temperature in the mixing circuit (MKL) preferably being monitored by means of a temperature sensor which is arranged in particular on the pump (11) or near the additive inlet opening (26).

## Revendications

1. Dispositif de mélange (1) permettant de mélanger un additif à un liquide (F) dans un lave-linge (2), présentant :
- une conduite principale (3), dans laquelle le liquide (F) s'écoule selon une direction d'écoulement (FR), dans lequel la conduite principale (3) présente une entrée (4) et une sortie (5) pour évacuer le liquide (F) conduit par la conduite principale (3),
- une conduite secondaire (9) qui forme, conjointement avec la conduite principale (3), un circuit de mélange (MKL),
- une pompe (11) avec laquelle le liquide (F) peut être pompé dans le circuit de mélange (MKL) à travers la conduite principale (3) et à travers la conduite secondaire (9),
- au moins une ouverture d'admission d'additif (26) sur la conduite principale (3) permettant d'ajouter un additif dans une zone de mélange (M) de la conduite principale (3), dans lequel, de préférence, un dispositif de dosage (12) est raccordé à l'ouverture d'admission d'additif (26), et
**caractérisé en ce que**
- la conduite principale (3) présente, à un point de départ (6) et à une extrémité (7), respectivement une vanne à trois voies (8),
- la conduite secondaire (9) est reliée à la conduite principale (3) par l'intermédiaire des vannes à trois voies (8), et
- le dispositif de mélange (1) présente au moins un moyen de tourbillonnement (13) dans la conduite principale (3).

2. Dispositif de mélange (1) selon la revendication 1,
**caractérisé en ce que** l'au moins un moyen de tourbillonnement (13) est disposé entre l'au moins une ouverture d'admission d'additif (26) et la pompe (11), en particulier est disposé dans la zone de mélange (M).

3. Dispositif de mélange (1) selon la revendication 1 ou 2,
**caractérisé en ce qu'**une distance entre l'au moins une ouverture d'admission d'additif (26) et l'au moins un moyen de tourbillonnement (13) est inférieure à 10 cm, de préférence inférieure à 5 cm ou inférieure à 2 cm.

4. Dispositif de mélange (1) selon l'une des revendications précédentes, **caractérisé en ce que** l'au moins un moyen de tourbillonnement (13) est une modification d'un diamètre intérieur (D_{H}) et/ou d'une surface de section transversale d'écoulement (A_{H}) de la conduite principale (3), dans lequel, de préférence, le long de la direction d'écoulement (FR), la surface de section transversale d'écoulement (A_{H}) augmente puis diminue à nouveau, dans lequel, en particulier, plusieurs modifications du diamètre intérieur (D_{H}) et/ou de la surface de section transversale d'écoulement (A_{H}) de la conduite principale (3) sont disposées les unes à la suite des autres le long de la direction d'écoulement (FR).

5. Dispositif de mélange (1) selon l'une des revendications précédentes, **caractérisé en ce que** l'au moins un moyen de tourbillonnement est un rotor (14) qui est disposé sur la pompe (11), de préférence sur un arbre rotatif de la pompe (11) comportant un rotor de pompe ou une roue pour l'entraînement du rotor (14).

6. Dispositif de mélange (1) selon l'une des revendications précédentes, **caractérisé en ce que** plusieurs ouvertures d'admission d'additif (26) sont disposées sur la conduite principale (3) dans la zone de mélange (M), lesquelles sont de préférence disposées de manière à être décalées les unes par rapport aux autres dans une direction circonférentielle (UR) et/ou le long de la direction d'écoulement (FR).

7. Dispositif de mélange (1) selon l'une des revendications précédentes, **caractérisé en ce que** le dispositif de mélange (1) est relié à une conduite d'eau fraîche (17), dans lequel la conduite d'eau fraîche (17) se situe de préférence directement au niveau du circuit de mélange (MKL).

8. Dispositif de mélange (1) selon l'une des revendications précédentes, **caractérisé en ce que** la conduite principale (3) est déformable dans la zone de mélange (M) et peut de préférence être déformée à l'aide d'actionneurs (28), dans lequel la conduite principale (3) est en particulier réalisée en tant que tuyau flexible et les actionneurs (28) sont réalisés pour courber la conduite principale (3) et/ou pour modifier une section transversale de la conduite principale (3).

9. Dispositif de mélange (1) selon l'une des revendications précédentes, **caractérisé en ce que** la pompe (11) est une pompe auxiliaire pour le circuit de mélange (MKL) du dispositif de mélange (1), en particulier lorsque le dispositif de mélange (1) est monté dans une zone supérieure du lave-linge (2) au-dessus d'un tambour (18), dans lequel le lave-linge (2) présente une pompe principale supplémentaire (10) pour la conduite de l'eau dans le lave-linge (2), dans lequel, de préférence, la pompe (11) est conçue pour modifier la direction d'écoulement (FR) dans le circuit de mélange (MKL).

10. Dispositif de mélange (1) selon l'une des revendications précédentes, **caractérisé en ce que** le dispositif de mélange (1) présente au moins un réservoir de liquide supplémentaire (25) qui est relié au circuit de mélange (MKL) de manière à pouvoir être activé ou désactivé par l'intermédiaire d'au moins une vanne (29), de préférence dans une conduite supplémentaire (27) parallèle à la conduite principale (3) et à la conduite secondaire (9).

11. Lave-linge (2), présentant :
- un tambour (18) rotatif comportant une paroi perméable à l'eau et un entraînement de tambour (19) pour sa rotation,
- un boîtier de tambour (20) dans lequel est disposé le tambour (18), dans lequel le boîtier de tambour (20) entoure le tambour (18),
- un dispositif d'alimentation (21) afin d'introduire de l'eau dans le tambour (18) sur le linge (W) qui s'y trouve,
- une pompe (10) et des conduites d'eau (22) afin de pomper de l'eau vers le dispositif d'alimentation (21),
- un appareil de chauffage (23) permettant de chauffer de l'eau, dans lequel l'appareil de chauffage (23) est relié à la pompe (10) d'une manière conductrice de fluide,
- un dispositif de dosage (12) permettant d'ajouter des additifs,
- et
- une commande de lave-linge (24) connectée à la pompe (10), à l'appareil de chauffage (23), à l'entraînement de tambour (19) et au dispositif de dosage (12),
**caractérisé par**
- un dispositif de mélange (1) selon l'une des revendications 1 à 10, dans lequel le dispositif de mélange est disposé en communication fluidique entre la pompe (10) et le dispositif d'alimentation (21) et est connecté à la commande de lave-linge (24).

12. Lave-linge (2) selon la revendication 11, **caractérisé en ce que** le dispositif de mélange (1) est disposé dans une zone supérieure du lave-linge (2) au-dessus du tambour (18), dans lequel le dispositif de mélange (1) est de préférence connecté à une alimentation en courant continu, **ou en ce que** le dispositif de mélange (1) est disposé dans une zone inférieure du lave-linge (2) en dessous du tambour (18), dans lequel le dispositif de mélange (1) est de préférence connecté à une alimentation en courant alternatif.

13. Procédé permettant de mélanger un additif à un liquide (F), **caractérisé en ce que** le procédé est mis en œuvre à l'aide d'un dispositif de mélange (1) selon l'une des revendications 1 à 10 ou à l'aide d'un lave-linge (2) selon l'une des revendications 11 ou 12.

14. Procédé selon la revendication 13, **caractérisé en ce que** le liquide (F) comportant au moins un additif ajouté est pompé à plusieurs reprises à travers le circuit de mélange (MKL) **et/ou en ce que** le volume du liquide (F) mélangé à l'additif est augmenté par au moins un réservoir de liquide supplémentaire (25), dans lequel le liquide (F) supplémentaire provenant de l'au moins un réservoir de liquide supplémentaire (25) est mélangé à l'additif dans le circuit de mélange (MKL), puis l'ensemble du liquide (F) se trouvant dans le circuit de mélange (MKL) et mélangé à l'additif est introduit dans le tambour (18).

15. Procédé selon la revendication 13 ou 14, **caractérisé en ce qu'**une température dans le circuit de mélange (MKL) est amenée, à l'aide d'un appareil de chauffage et/ou de refroidissement (15), à une température adaptée aux additifs respectifs, dans lequel, de préférence, la température dans le circuit de mélange (MKL) est surveillée à l'aide d'un capteur de température qui est en particulier disposé au niveau de la pompe (11) ou à proximité de l'ouverture d'admission d'additif (26).
